# EUROPEAN PATENT SPECIFICATION

(11) **EP 3 210 374 B1**
(45) Date of publication and mention of the grant of the patent: **31.10.2018**
(21) Application number: 15798581.3
(22) Date of filing: 07.10.2015
(51) Int. Cl.: H04N 7/18, G02B 27/00, B60R 1/00

(54) **A REAR VIEW SYSTEM**
RÜCKBLICKSYSTEM
SYSTÈME DE VISUALISATION ARRIÈRE

(30) Priority: 23.10.2014 TR 201412471
(43) Date of publication of application: 30.08.2017
(73) Proprietor: Tofas Turk Otomobil Fabrikasi Anonim Sirketi, Bursa (TR)
(72) Inventor: DUSMEZKALENDER, Yavuz, Osmangazi/Bursa (TR); AYARTURK, Hasan, Osmangazi/Bursa (TR)
(74) Representative: Dericioglu Kurt, Ekin
(86) International application number: PCT/TR2015/050126
(87) International publication number: WO 2016/064361

(56) References cited:
- EP-A1- 1 974 998
- EP-A2- 2 351 668
- DE-A1-102008 059 269
- DE-A1-102012 203 491
- DE-A1-102012 219 280
- US-A1- 2012 069 184
- US-A1- 2012 173 069

## Description

### Field of the Invention

The present invention relates to a rear view system which provides visibility by sliding the screens used in place of the rear-view and side mirrors thereby sliding the view that continuously changes depending on the eye position of the driver without making any mechanical movement.

### Background of the Invention

Automobile drivers continuously use the rear view mirrors in order to easily view the back of the vehicles that they are driving. The said rear-view mirror is of two types, one located inside the vehicle and the others at the right and left of the outer side of the vehicle. The inner rear-view mirrors show the back of the vehicle which cannot be shown by the side rear-view mirrors. Adjustment mechanism of the said rear-view mirrors is performed manually by the drivers. In order to do this, the angles of view of the side rear-view mirrors are adjusted by means of a button provided at the part of the driver seat, while the inner rear-view mirror is adjusted by hand. However, in the said systems, rear-view mirror adjustments of the vehicles should be made all over again for each driver and sitting position, and the inner rear-view control system is not sufficient for different sitting positions during driving. Furthermore, control of the vehicle navigator control system during driving causes risky actions. Thus, in order to provide a solution to these problems, various systems are developed for automatic adjustment of the said rear-view mirrors according to the driver.

German patent document no. DE102011080198**,** an application in the state of the art, discloses a method which enables to determine the current position parameters of a driver by means of an interior sensor system. In this method, the rear view mirror is automatically adjusted in response to the head and eye position of the driver. DE10210023160 A1 discloses a rear view system according to the preamble of claim 1.

German patent document no. DE102010023160**,** an application in the state of the art, discloses a system which carries out mirror adjustment according to the head and eye position of the driver. In the said invention, height of the driver seat is taken into account and the head and eye positions are recorded with a camera.

### Problems Solved by the Invention

The objective of the present invention is to provide a rear view system which provides visibility by sliding the screens used in place of rear-view and side mirrors thereby sliding the view that continuously changes depending on the eye position of the driver without making any mechanical movement.

Another objective of the present invention is to provide a rear view system which enables to control the vehicle navigator with the eye movements of the driver.

### Detailed Description of the Invention

A rear view system developed to fulfill the objective of the present invention is illustrated in the accompanying figures, in which:

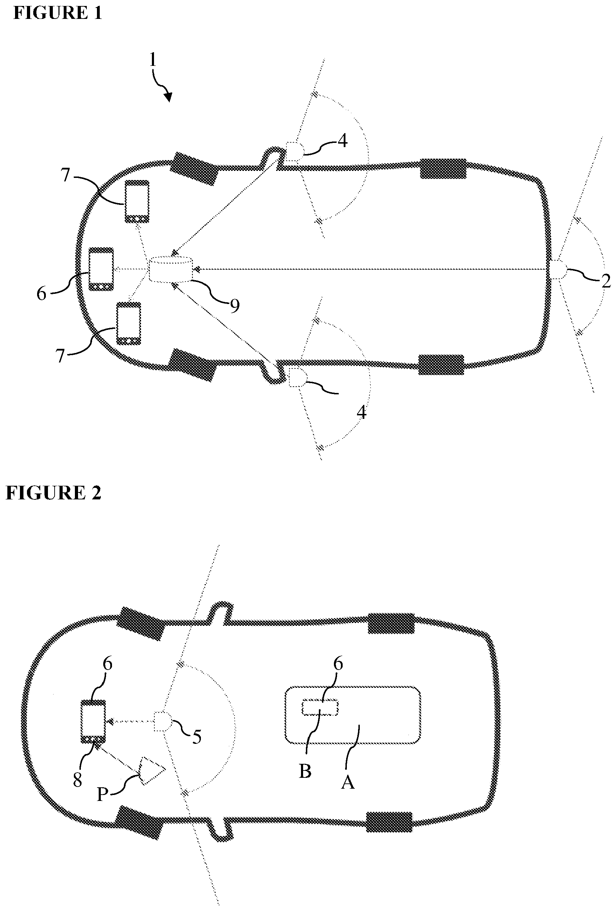

**Figure 1** is a schematic view of the rear view system.
**Figure 2** is a view of only the part of the stitched image, to which the eye is looking at, with dashed lines on the rear view screen.

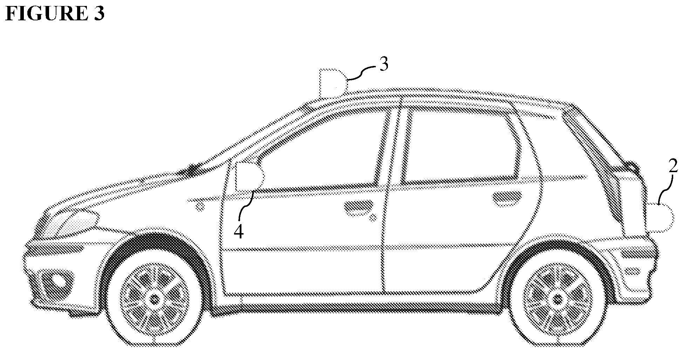

**Figure 3** is a view of the rear, side and overhead cameras on the vehicle.

The components shown in the figures are given reference numbers as follows:
**1.** Rear view system
**2.** Rear camera
**3.** Overhead camera
**4.** Side camera
**5.** Inner camera
**6.** Rear view screen
**7.** Side screen
**8.** Eye sensor
**9.** Vehicle control system
**A.** Stitched image received from all of the cameras.
**B.** The part in the stitched image where the eye looks at.
**P.** Pupil

The rear view system (1) of the present invention essentially comprises:
- at least one rear camera (2), which is arranged at a preferred area at the back of the vehicle, and which enables to take the image of the view at the back of the vehicle,
- at least one overhead camera (3), which is arranged at a preferred area at the top of the vehicle, and which enables to take the image of the view at the back of the vehicle,
- at least two side cameras (4), which are positioned at the right and left sides of the vehicle, and which enable to take the image of the view at the right/left back of the vehicle,
- at least one inner camera (5) which enables to take images of the in-vehicle views,
- at least one rear view screen (6), which is located in the vehicle at a place where it can be seen, and which enables to display the images received from the rear camera (2),
- at least two side screens (7), which are located in the vehicle at a place where it can be seen, and which enable to display the images received from the side cameras (4),
- at least one eye sensor (8) which enables to measure the coordinates and movements of the pupils (P),
- at least one vehicle control system (9), which is adapted to slide the images in the rear view screen (6) and side screens (7) according to the data received from the eye sensor (8).

In the rear view system (1) of the present invention, differing from the current vehicles, instead of the inner rear-view mirror and the side mirrors, the rear view screen (6) and the side screens (7), which are located at the right and left of the vehicle preferably on the glove box or door panel, are used. The images coming from the cameras placed at the back and sides of the vehicle are projected on these screens. The image coming from a rear camera (2); which is arranged at the back of the vehicle (preferably at the current radio antenna area at the rear top part), or which is the current park sensor; or from an overhead camera (3); which is arranged on the top part of the vehicle; are displayed on the rear view screen (6) by wired or wireless means; and the images received from the side cameras (4) positioned on both sides of the vehicle (at the places where the old side mirrors were located) are displayed on the side screens (7).

In one embodiment of the invention, the rear view screen (6) and the side screens (7) are fixed, and in another embodiment of the invention the positions of these screens are changeable (they are not required to be fixed). The said screens can be a mobile device such as a telephone, tablet, etc.

In one embodiment of the invention, the images recorded by the rear camera (2) (or park camera) and/or the images recorded by the overhead camera (3) and the side cameras (4) can be stitched by the vehicle control system (9) via a software to obtain a panoramic view. Thus, the image projected on the rear view screen (6) and preferably on the side screens (7) is comprised of combination of the images received from the said three cameras.

The rear view system (1) of the present invention is activated by the driver via telephone, fingerprint, face recognition, key or similar means when the vehicle is activated. If a mobile device (telephone, tablet, etc.) is used as the rear view screen (6) and/or side screen (7), the vehicle is not activated until the said device is placed within its position within the vehicle. This system can also be used for unlocking the vehicle doors and activating the engine, and when the vehicle is not being used, the mobile communication device can be used for different purposes by the vehicle owner.

As soon as the rear view system (1) is activated, the images received from the rear camera (2) and the side cameras (4) are displayed on the rear view screen (6) and the side screens (7). The said images are displayed on the side screens (7) and the rear view screen (6) such that the adjustments at pre-adjusted rear view conditions is valid.

In one embodiment of the invention, when the driver gets into the vehicle, the hip-point is measured by the vehicle control system (9) according to the driver seat position. This seat position which is one of the vehicle design values is predefined in the vehicle; and in vehicles, wherein the seat height and forward-backward adjustment can be controlled electrically, this seat position data can be received by the vehicle control system (9) from the seat adjustment system. The default hip-point coordinates for the foremost and lowermost positions of the front seat are predefined in the seat adjustment system. Since the speed of the electric motor, by which seat adjustment is carried out in the electrical seat adjustment system, is fixed, operation time and direction values of the motors can be recorded and processed by the vehicle control system (9). By using these values, the last position of the seat is recorded and this value is used as reference for the next height and position adjustment. Thus, hip-point of the driver seat can be measured by the vehicle control system (9) at every position.

In another embodiment of the invention, since the position of the driver's pupils relative to the eye sensor (8) is known, directly these values can be used without considering the hip-point. Then, this position information is delivered to the vehicle control system (9).

The coordinates and movements of the driver's pupils (P) are measured by means of an eye sensor (8) and these measured values are transmitted to the vehicle control system (9).

When the driver or the sitting position of the driver changes, the eye sensor (8), which is preferably located on the rear view screen (6), detects the coordinates and movements of the pupil (P) (the area that it looks at) and transmits them to the vehicle control system (9), and the vehicle control system (9) moves the wide angle images taken by the rear camera (2), the overhead camera (3) and the side cameras (4) towards the area where the eye looks at (only slides the image, the camera does not move). In other words, a part of the image that is received from the cameras and stitched is displayed on the rear view screen (6) and this part that is displayed is changed by being slid according to the point the eye looks at. The sliding speed of the image can be adjusted by the driver. The said adjustment process can be performed via the buttons around the rear view screen (6) before starting to drive the vehicle. In another embodiment of the invention, the said adjustment can be made via making selections on the menus provided on the rear view screen (6) which is a touchscreen. Thus, driver comfort is enhanced and a safer driving is ensured.

In one embodiment of the invention, the sliding function can be cancelled via the said buttons or the touchscreen according to the preference of the driver. In this case, the rear view screen (6) and the side screens (7) can be manually adjusted just like the mirrors in the current systems, and the option of maintaining the adjustments can be used during driving via the touchscreen. In another embodiment of the invention, all adjustments of the said rear view screen (6) which has a protocol that can communicate with the vehicle computer can also be made via a touch-operated vehicle computer which displays information such as the instantaneous fuel consumption, radio channels, etc.

In one embodiment of the invention, the rear view screen (6) is at the nominal vehicle field of view position by means of the signal sent as a result of the formulization obtained by the first eye alignment and hip-point measurement. Although the rear camera (2) can scan a larger area, it displays the area in the perception level of the driver, that is to say the area that a current conventional mirror can show on the rear view screen (6). When the driver tries to see the blind spot at the back, the information about the position change of the pupils (P) is detected by means of the eye sensor (8) and transmitted to the vehicle control system (9), and the image on the rear view screen (6) and the side screens (7) are slid by the vehicle control system (9) towards the blind spot that is desired to be seen thereby enabling a larger area to be seen.

In one embodiment of the invention, the vehicle navigator is also controlled by the vehicle control system (9) via driver's eye movements instead of a touchscreen and thus possible risky movements during driving are prevented.

The sensors and cameras used in the rear view system (1) of the present invention can be used to prevent the vehicle from getting damaged when in parked position. All of the sensors of the vehicle (park sensor, door handles and etc.) can be adjusted to be activated when the vehicle is in parked position, and thus when a movement approaching the vehicle or trying to open the doors is detected, the images taken by the vehicle inner camera (5) and the rear camera (2) and side cameras (4) can be sent to the defined hardware (mobile phone, tablet, watch, etc.) of the vehicle owner.

## Claims

1. A rear view system (1) **comprising**
- at least one rear camera (2), which is arranged at a preferred area at the back of the vehicle, and which enables to take the image of the view at the back of the vehicle,
- at least two side cameras (4), which are positioned at the right and left sides of the vehicle, and which enable to take the image of the view at the right/left back of the vehicle,
- at least one rear view screen (6), which is located in the vehicle at a place where it can be seen, and which enables to display the images received from the rear camera (2),
- at least one eye sensor (8) which enables to measure the coordinates and movements of the pupils (P),
- at least one vehicle control system (9), which is adapted to slide the images in the rear view screen (6) according to the data received from the eye sensor (8), **characterized in that** the vehicle control system (9) is adapted to measure the hip-point according to the driver seat position when the driver gets into the vehicle.

2. The rear view system (1) according to Claim 1, **characterized by** the rear view screen (6) which is not required to be fixed and whose position can be changed.

3. The rear view system (1) according to Claim 1, **characterized by** at least two side screens (7), which are located in the vehicle at a place where it can be seen, and which enable to display the images received from the side cameras (4).

4. The rear view system (1) according to Claim 3, **characterized by** the side screens (7) which are located at the right and left of the vehicle, on the glove box or door panel.

5. The rear view system (1) according to Claim 3, **characterized by** at least one vehicle control system (9), which is adapted to slide the images in the side screen (7) according to the data received from the eye sensor (8).

6. The rear view system (3) according to Claim 1, **characterized by** the side screens (7) which are not required to be fixed and whose positions can be changed.

7. The rear view system (1) according to Claim 1 or 2, **characterized by** the rear view screen (6) and the side screens (7) which can be a mobile device such as a telephone, tablet, etc.

8. The rear view system (1) according to Claim 1, **characterized by** the vehicle control system (9), which is adapted to stitch the images taken by the rear camera (2) and/or overhead camera (3) with the images taken by the side cameras (4).

9. The rear view system (1) according to Claim 1, **characterized by** the vehicle control system (9), which is adapted to receive the information coordinates and movements of the pupil (P) (the area that it looks at) detected by the eye sensor (8) that is preferably located on the rear view screen (6) when the driver or the sitting position of the driver changes, and to move the wide angle images taken by the rear camera (2) and/or overhead camera (3) and the side cameras (4) towards the area where the eye looks at on the rear view screen (6) and the side screens (7).

10. The rear view system (1) according to Claim 1, **characterized by** the vehicle control system (9), which is adapted to control the vehicle navigator by the driver's eye movements.

11. The rear view system (1) according to Claim 1, **characterized by** the vehicle control system (9), which is adapted to transmit the data it receives actively from the sensors and the images taken by the rear camera (2) and side cameras (4) and/or inner camera (5) to the defined hardware of the vehicle owner when the vehicle is in parked position.

12. The rear view system (1) according to Claim 1, **characterized in that** it is activated by the driver via telephone, fingerprint, face recognition, key or similar means when the vehicle is activated.

13. The rear view system (1) according to Claim 1, **characterized in that** it is activated when a mobile device (telephone, tablet, etc.) used as the rear view screen (6) or side screen (7) is placed within its position within the vehicle.

## Patentansprüche

1. Ein Rückblicksystem (1) **umfassend**
- mindestens eine Rückwärtskamera (2), die in einem bevorzugten Gebiet auf der Rückseite des Fahrzeugs angeordnet ist, und die ermöglicht, damit die Abbildung der Ansicht auf der Rückseite des Fahrzeugs genommen wird,
- mindestens zwei Seitenkameras (4), die an den rechten und linken Seiten des Fahrzeugs positioniert sind, und die ermöglichen, damit die Abbildung der Ansicht auf dem rechten/linken Bereich der Rückseite des Fahrzeugs genommen wird,
- mindestens einen Rückblickschirm (6), der im Fahrzeug an einem Platz angeordnet ist, wo er gesehen werden kann, und der ermöglicht, damit die von der Rückwärtskamera (2) empfangenen Abbildungen angezeigt werden,
- mindestens einen Augensensor (8), der ermöglicht, damit die Koordinaten und Bewegungen der Pupillen (P) gemessen werden,
- mindestens ein Fahrzeugsteuerungssystem (9), das zum Verschieben der Abbildungen auf dem Rückblickschirm (6) nach den vom Augensensor (8) empfangenen Daten eingerichtet ist, **dadurch gekennzeichnet ist, dass** das Fahrzeugsteuerungssystem (9) zum Messen des Hüfte-Punktes nach der Position des Fahrersitzes eingerichtet ist, wenn der Fahrer ins Fahrzeug steigt.

2. Das Rückblicksystem (1) nach Anspruch 1, **gekennzeichnet durch** den Rückblickschirm (6), der nicht fixiert werden muss und dessen Position geändert werden kann.

3. Das Rückblicksystem (1) nach Anspruch 1, **gekennzeichnet durch** mindestens zwei Seitenschirme (7), die im Fahrzeug an einem Platz angeordnet sind, wo sie gesehen werden können, und die ermöglichen, damit die von den Seitenkameras (4) empfangenen Abbildungen angezeigt werden.

4. Das Rückblicksystem (1) nach Anspruch 3, **gekennzeichnet durch** die Seitenschirme (7), die rechts und links des Fahrzeugs in dem Handschuhfach oder der Türverkleidung angeordnet sind.

5. Das Rückblicksystem (1) nach Anspruch 3, **gekennzeichnet durch** mindestens ein Fahrzeugsteuerungssystem (9), das zum Verschieben der Abbildungen auf den Seitenschirme (7) nach den vom Augensensor (8) empfangenen Daten eingerichtet ist.

6. Das Rückblicksystem (3) nach Anspruch 1, **gekennzeichnet durch** die Seitenschirme (7), die nicht fixiert werden müssen und deren Positionen geändert werden können.

7. Das Rückblicksystem (1) nach Anspruch 1 oder 2, **gekennzeichnet durch** den Rückblickschirm (6) und die Seitenschirme (7), die ein mobiles Gerät wie ein Telefon, ein Tablet-PC, usw. sein können.

8. Das Rückblicksystem (1) nach Anspruch 1, **gekennzeichnet durch** das Fahrzeugsteuerungssystem (9), das zum Zusammenheften der Abbildungen von der Rückwärtskamera (2) und/or der Overhead-Kamera (3) und der Abbildungen von den Seitenkameras (4) eingerichtet ist.

9. Das Rückblicksystem (1) nach Anspruch 1, **gekennzeichnet durch** das Fahrzeugsteuerungssystem (9), welches derart eingerichtet ist, dass es die Information über die vom Augensensor (8) erfassten Koordinaten und Bewegungen der Pupille (P) (der Bereich, welchen sie ansieht) empfängt, das vorzugsweise am Rückblickschirm (6) angeordnet ist, when der Fahrer oder die Sitzposition des Fahrers sich verändert, und dass es die Weitwinkelabbildungen von der Rückwärtskamera (2) und/oder der Overhead-Kamera (3) und von den Seitenkameras (4) zum Bereich bewegt, wo das Auge auf dem Rückblickschirm (6) und den Seitenschirme (7) ansieht.

10. Das Rückblicksystem (1) nach Anspruch 1, **gekennzeichnet durch** das Fahrzeugsteuerungssystem (9), das zum Steuern des Fahrzeugnavigators durch die Augenbewegungen des Fahrers eingerichtet.

11. Das Rückblicksystem (1) nach Anspruch 1, **gekennzeichnet durch** das Fahrzeugsteuerungssystem (9), das dertart eingerichtet ist, dass es die von Sensoren aktiv empfangenen Daten und die Abbildungen von der Rückwärtskamera (2) und den Seitenkameras (4) und/oder der inneren Kamera (5) zu der definierten Hardware des Besitzers des Fahrzeugs, wenn das Fahrzeug in der Parkposition befindet.

12. Das Rückblicksystem (1) nach Anspruch 1 **dadurch gekennzeichnet, dass** es von Fahrer per Telefon, Fingerabdruck, Gesichterkennung, Schlüssel oder ähnlichen Mittel aktiviert wird, wenn das Fahrzeug aktiviert ist.

13. Das Rückblicksystem (1) nach Anspruch 1 **dadurch gekennzeichnet, dass** es aktiviert ist, wenn ein mobiles Gerät (Telefon, Tablet-PC, usw.) als Rückblickschirm (6) benutzt wird, oder der Seitenschirm (7) in seiner Position im Fahrzeug platziert ist.

## Revendications

1. Système de vue arrière (1) **comprenant**
- au moins une caméra arrière (2), qui est disposée dans une zone préférée à l'arrière du véhicule et qui permet de prendre l'image de la vue à l'arrière du véhicule,
- au moins deux caméras latérales (4) qui sont placées sur les côtés droit et gauche du véhicule et qui permettent de prendre l'image de la vue à droite / à l'arrière du véhicule,
- au moins un écran de vue arrière (6), qui est situé dans le véhicule à un endroit visible et permettant d'afficher les images reçues de la caméra arrière (2),
- au moins un capteur oculaire (8) permettant de mesurer les coordonnées et les mouvements des pupilles (P),
- au moins un système de commande de véhicule (9) adapté pour faire glisser les images dans l'écran de vue arrière (6) en fonction des données reçues du capteur oculaire (8), **caractérisé en ce que** le système de commande du véhicule (9) est adapté mesurer le point de la hanche en fonction de la position du siège du conducteur lorsque le conducteur entre dans le véhicule.

2. Système de vue arrière (1) selon la revendication 1, **caractérisé par** l'écran de vue arrière (6) qu'il n'est pas nécessaire de fixer et dont la position peut être modifiée.

3. Système de vue arrière (1) selon la revendication 1, **caractérisé par** au moins deux écrans latéraux (7) qui sont situés dans le véhicule à un endroit visible et permettant d'afficher les images reçues des caméras latérales (4).

4. Système de vue arrière (1) selon la revendication 3, **caractérisé par** les écrans latéraux (7) qui sont situés à droite et à gauche du véhicule, sur la boîte à gants ou sur le panneau de porte.

5. Système de vue arrière (1) selon la revendication 3, **caractérisé par** au moins un système de commande de véhicule (9), qui est adapté pour faire glisser les images dans l'écran latéral (7) en fonction des données reçues du capteur oculaire (8).

6. Système de vue arrière (3) selon la revendication 1, **caractérisé par** les écrans latéraux (7) qui ne doivent pas nécessairement être fixés et dont les positions peuvent être modifiées.

7. Système de vue arrière (1) selon la revendication 1 ou 2, **caractérisé par** l'écran de vue arrière (6) et les écrans latéraux (7) pouvant être un appareil mobile tel qu'un téléphone, une tablette, etc.

8. Système de vue arrière (1) selon la revendication 1, **caractérisé par** le système de commande de véhicule (9), qui est adapté pour piquer les images prises par la caméra arrière (2) et/ou la caméra aérienne (3) avec les images prises par les caméras latérales (4).

9. Système de vue arrière (1) selon la revendication 1, **caractérisé par** le système de commande de véhicule (9), qui est adapté pour recevoir les coordonnées d'informations et les mouvements de la pupille (P) (la zone qu'il regarde) détectés par le capteur oculaire (8) situé de préférence sur l'écran de vue arrière (6) lorsque le conducteur ou la position assise du conducteur change, et pour déplacer les images grand angle prises par la caméra arrière (2) et / ou la caméra aérienne (3) et les caméras latérales (4) vers la zone où l'oeil regarde sur l'écran de vue arrière (6) et les écrans latéraux (7).

10. Système de vue arrière (1) selon la revendication 1, **caractérisé par** le système de commande de véhicule (9), qui est adapté pour commander le navigateur de véhicule par les mouvements oculaires du conducteur.

11. Système de vue arrière (1) selon la revendication 1, **caractérisé par** le système de commande de véhicule (9), qui est adapté pour transmettre les données qu'il reçoit activement des capteurs et des images prises par la caméra arrière (2) et les caméras latérales (4) et/ou la caméra interne (5) au matériel défini du propriétaire du véhicule lorsque le véhicule est en position de stationnement.

12. Système de vue arrière (1) selon la revendication 1, **caractérisé par** il est activé par le conducteur par téléphone, empreinte digitale, reconnaissance du visage, clé ou tout autre moyen lorsque le véhicule est activé.

13. Système de vue arrière (1) selon la revendication 1, **caractérisé par** il est activé lorsqu'un appareil mobile (téléphone, tablette, etc.) utilisé comme écran de vue arrière (6) ou écran latéral (7) est placé dans sa position dans le véhicule.
